# EUROPÄISCHE PATENTSCHRIFT

(11) **EP 0 980 646 B1**
(45) Veröffentlichungstag und Bekanntmachung des Hinweises auf die Patenterteilung: **02.05.2003**
(21) Anmeldenummer: 99113906.4
(22) Anmeldetag: 16.07.1999
(51) Int. Cl.: A01F 15/14

(54) **Rundballenpresse**
Rotobaler
Presse à balles rondes

(30) Priorität: 17.08.1998 DE 19837265
(43) Veröffentlichungstag der Anmeldung: 23.02.2000
(73) Patentinhaber: DEERE & COMPANY, Moline, Illinois 61265-8098 (US)
(72) Erfinder: Carteret, Frederic, 70100 Autrey les Gray (FR); Georget, Claude, 70100 Chargey les Gray (FR)
(74) Vertreter: Magin, Ludwig Bernhard

(56) Entgegenhaltungen:
- EP-A- 0 159 953
- EP-A- 0 535 532
- EP-A- 0 858 733
- GB-A- 2 150 491

## Beschreibung

Die Erfindung betrifft eine Rundballenpresse mit einem Preßraum, der auf seinem Umfang im wesentlichen von Preßelementen umgeben wird, und mit einer Bindevorrichtung, die Garn auf die Umfangsfläche eines in dem Preßraum gebildeten und sich drehenden Ballens aufwickelt.

In herkömmlicher Weise werden Rundballen in einer Rundballenpresse mit Garn umwickelt, um zu verhindern, daß das gewickelte Erntegut nach dem Verlassen des Preßraums auseinanderfällt. Das Garn wird lediglich auf die Umfangsfläche des Ballens aufgewickelt, so daß das Garnende nicht befestigt wird und nur lose aufliegt. Nach dem Auswerfen des Ballens aus dem Preßraum kann es daher geschehen, daß sich je nach der Drehrichtung des Ballens das Garnende abwickelt und der Ballen auseinanderfällt bzw. das lose Garnende bei der weiteren Handhabung des Ballens stört.

Die DE-A-41 32 664 offenbart zum Festlegen der Garnenden zwei Vorrichtungen, mit denen das Garnende auf dem Ballen befestigt werden kann, nämlich einmal, indem man es in die Stirnseiten eindrückt und einmal indem man es mit einem Klebeband sichert.

Die nicht vorveröffentliche deutsche Patentanmeldung mit dem Aktenzeichen 197 05 582.6, die nicht zur Beurteilung der erfinderischen Tätigkeit heranzuziehen ist, zeigt eine Rundballenpresse mit einem drehfest angebrachten Nutformer, der in Anlage an dem sich drehenden Ballen eine Nut oder Rille in den Ballenumfang einschneidet, in die die losen Garnenden so eingezogen werden können, so daß sie darin kraftschlüssig gehalten werden.

Das der Erfindung zugrunde liegende Problem wird darin gesehen, daß diese Art der Garnendenbefestigung relativ aufwendig ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das Garn wird im Bereich der Umfangsfläche in den Ballen geführt und allein durch die Reibungskräfte zwischen dem Ballen und dem Garn gehalten, so daß nach Beendigung des Wickelvorgangs und dem Abschneiden des Garns das Garnende nicht lose auf der Ballenoberfläche aufliegt, sondern in der Ballenumfangsfläche gesichert ist. Es ist kein Vernähen oder Verwenden von Haftmitteln erforderlich. Da das Einführen bzw. Eindrücken auf der Umfangsfläche erfolgt, ist es nicht notwendig, das Garn in den Bereich der Stirnfläche des Ballens zu bringen, da das Garn an der Stelle verbleiben kann, an der es sich üblicherweise nach Abschluß des Bindevorgangs befindet. Diese nach jedem Bindevorgang gleiche Stelle kann in einem Randbereich, in einem Mittenbereich oder in jedem anderen Bereich auf dem Umfang des Ballens angeordnet sein. Das Eindrückmittel kann ausgewechselt oder an verschiedene Einsatzbedingungen angepaßt werden. Das Eindrückmittel kann durch den drehenden Ballen bewegt werden, wenn es in dessen Oberfläche eingreift und eine Rille in die Umfangsoberfläche des Ballens einformt, in die das Garn am Ende des Wickelprozesses durch die Eindrückvorrichtung eingeführt wird. Ein zusätzlicher Antrieb zum Bewegen des Eindrückmittels ist daher nicht erforderlich. Üblicherweise tendiert die Rille in der Ballenfläche aufgrund der Beschaffenheit des Materials des Ballens dazu, sich selbsttätig zu schließen, und hält so das Garn zusätzlich in der Ballenoberfläche.

Weist die Eindrückvorrichtung wenigstens einen Arm auf, auf dem das Eindrückmittel vorzugsweise um eine wenigstens annähernd horizontale Achse drehbar gelagert ist, so kann das Eindrückmittel sowohl einzeln als auch zusammen mit dem Arm ausgewechselt oder auch verstellt werden. Der Arm kann durch einen Halter aufgenommen werden, der beispielsweise an einem Rahmen oder an einer Wandung der Ballenpresse angeordnet ist.

Durch an dem Eindrückmittel vorgesehene Vertiefungen zur Garnführung wird sichergestellt, daß das Garn im Wirkungsbereich des Eindrückmittels verbleibt und in die durch die Eindrückvorrichtung gebildete Rille gelangt und sich nicht an anderer Stelle um den Ballen wickelt. Vorteilhaft ist es, wenn diese Vertiefungen sich in Umfangsrichtung des Eindrückmittels erstrecken. Das Garn legt sich in diese Vertiefungen, da es sich in einem gespannten Zustand befindet, und verbleibt dort bis es nach Abschluß des Wickelvorgangs abgetrennt wird.

Weist das Eindrückelement zumindest einen fingerartigen Vorsprung auf, so drückt dieser Vorsprung eine besonders tiefe Rille in die Umfangsoberfläche des Ballens und führt darüber hinaus dazu, daß das Eindrückelement durch die Drehung des Ballens in Bewegung versetzt wird. Die übrige Oberfläche des Eindrückmittels greift weniger oder gar nicht in den Ballen ein. Wird das Eindrückmittel in der Art eines Sternrades ausgeführt, so weist es mehrere zackenartige bzw. fingerartige Vorsprünge auf, die gleichmäßig über den Umfang des Eindrückmittels verteilt sind und zu einer gleichmäßigen Bewegung des Eindrückmittels führen.

Das Eindrückmittel kann vorteilhafterweise aus zwei oder mehr Einzelteilen bestehen, die beispielsweise jeweils als Sternrad ausgeführt werden können. Die Vertiefung zur Garnführung kann dabei an einem oder an mehreren der Einzelteilen vorgesehen sein. Durch die Anzahl und Ausbildung der Einzelteile bzw. Einzelsternräder wird die Gesamtausbildung des Eindrückmittels bestimmt. So können die Zinken der Sternräder beispielsweise versetzt angeordnet sein; eine besonders günstige Führung ergibt sich aber, wenn die Zinken der Sternräder einander gegenüberliegen.

Besonders einfach in der Herstellung ist es, wenn die Vertiefung durch einen Spalt zwischen den voneinander beabstandeten Einzelteilen bzw. Einzelsternrädern gebildet wird, so daß kein zusätzlicher Arbeitsgang zum Einbringen der Vertiefung notwendig ist. Die Breite der Vertiefung kann beispielsweise durch das Einbringen von Abstandhaltern wie Hülsen oder durch die Ausbildung der Einzelsternräder an die Erfordernisse, d. h., beispielsweise an die Dicke des Garns angepaßt werden.

Zwar ist eine abgerundete Ausführung der Zinken der Sternräder sowie eine unterschiedliche Dimensionierung der Sternräder selbst denkbar; es hat sich aber als vorteilhaft erwiesen, die Zinken möglichst spitz auszubilden und für die Sternräder einen Durchmesser von ca. 140 mm zu wählen. Darüber hinaus ist es vorteilhaft, die Eindrückvorrichtung bzw. das Eindrückmittel möglichst nahe bzw. dicht an der Starterwalze der Ballenpresse anzuordnen.

Weist die Bindevorrichtung der Rundballenpresse eine bewegliche Garnführung auf, so wird das Garn nach Abschluß des Bindevorgangs zu der Eindrückvorrichtung gebracht. Es ist auch denkbar, daß dies manuell oder durch zusätzliche Hilfsmittel, wie Garnführungen etc. durchgeführt bzw. unterstützt wird, dies ist aber aufwendiger.

Ein günstiger Garnverlauf kann dadurch erreicht werden, daß an dem Arm der Eindrückvorrichtung Mittel zur Führung des Garns vorgesehen werden. Wenn das Garn beispielsweise durch die Wirkung der Bindevorrichtung in die Nähe der Eindrückvorrichtung gelangt, wird das Garn durch die Mittel, die beispielsweise durch Stifte oder Haken etc. ausgebildet sein können, aufgenommen und geführt.

Um den Bindevorgang automatisch abschließen zu können, ist es vorteilhaft, wenn die Bindevorrichtung oder die Eindrückvorrichtung eine Schneidvorrichtung zum Trennen des Garns aufweist, so daß kein manuelles Durchtrennen des Garns erforderlich ist oder es zu einem gewaltsamen Abreißen des Garns beim Entladen des Ballens kommt.

Wird das Eindrückmittel in bezug auf den Preßraum verstellbar angeordnet, so kann es an verschiedene Erntegüter wie Silage, Heu und Stroh angepaßt werden. Bei einem weicheren Erntegut wie beispielsweise bei Silage kann ein stärkeres Einpressen erforderlich sein. Dies kann beispielsweise dadurch erreicht werden, daß das Eindrückmittel in Richtung des Ballens verschoben wird. Bei härterem Erntegut kann es genügen, wenn das Garn weniger stark in den Ballen gedrückt wird, wozu der Abstand zwischen dem Eindrückmittel und der Ballenmitte vergrößert werden kann, beispielsweise indem das Eindrückmittel verschoben oder verschwenkt wird. Abhängig von den jeweiligen Erntebedingungen und dem Erntegut kann auch ein Verändern der Winkellage des Eindrückmittels wünschenswert sein. Hierzu können geeignete Lagerungen des Eindrückmittels an der Eindrückvorrichtung bzw. der Eindrückvorrichtung an einer Wandung oder einem anderen Teil der Ballenpresse vorgesehen sein. Die Eindrückvorrichtung kann beispielsweise einen Arm aufweisen, der durch einen an der Ballenpresse befestigten Halter aufgenommen wird. Durch eine geeignete Auswahl des Armmaterials wie beispielsweise einem Vierkant- oder Sechskantprofil kann eine einfache Verstellmöglichkeit erzielt werden, indem der Tragarm in verschiedenen Positionen in den entsprechend ausgebildeten, beispielsweise hülsenartigen Halter gesteckt wird. Auch kann der Tragarm in dem Halter verschiebbar vorgesehen sein und beispielsweise mittels Steckbolzen oder anderer üblicher Sicherungsmittel in seiner jeweiligen Position im Halter gesichert werden. Zur Verstellung des Eindrückmittels können beispielsweise an dem Arm oder an einem zwischen Arm und Eindrückmittel angeordneten Lagerteil wie einer Lochscheibe etc. verschiedene Bohrungen in unterschiedlichen Positionen zum Befestigen des Eindrückmittels vorgesehen sein. Es ist auch denkbar, die Eindrückvorrichtung so auszubilden, daß sie während des Bindevorgangs nicht in den Preßraum hineinragt und erst zum Abschluß oder nach Beendigung des Bindevorgangs in den Preßraum eingebracht, beispielsweise hineingeschwenkt oder entlang einer linearen Führung hineingeschoben wird. Das Verschwenken oder Verschieben der Eindrückvorrichtung kann auch in Abhängigkeit vom Ballendurchmesser gesteuert werden, so daß die Eindrückvorrichtung ab einer gewissen Ballengröße mit dem Ballen zusammenwirkt. Hierzu kann ein Antrieb vorgesehen sein, der die Eindrückvorrichtung mechanisch oder aber hydraulisch bzw. pneumatisch verstellt. Ein solcher Antrieb geht beispielsweise aus der deutschen Patentanmeldung mit dem Aktenzeichen 197 05 582.6, auf die bereits zuvor Bezug genommen wurde, hervor.

Es kann vorteilhaft sein, wenn die Spannung des Garns nach Abschluß des eigentlichen Bindevorgangs verändert, d. h., erhöht oder reduziert wird, um das Garn mehr oder weniger stark in den Bereich der Ballenoberfläche zu ziehen oder um das Einpressen bzw. Eindrücken des Garns in den Ballen zu vereinfachen oder um beispielsweise ein Abreißen des Garns zu verhindern.

In der Zeichnung ist ein nachfolgend näher beschriebenes Ausführungsbeispiel der Erfindung dargestellt. Es zeigt:
- Fig. 1: einen Längsschnitt durch eine erfindungsgemäße Rundballenpresse mit einer Bindevorrichtung und einer Eindrückvorrichtung und
- Fig. 2: eine einzelne Darstellung der Eindrückvorrichtung aus Fig. 1.

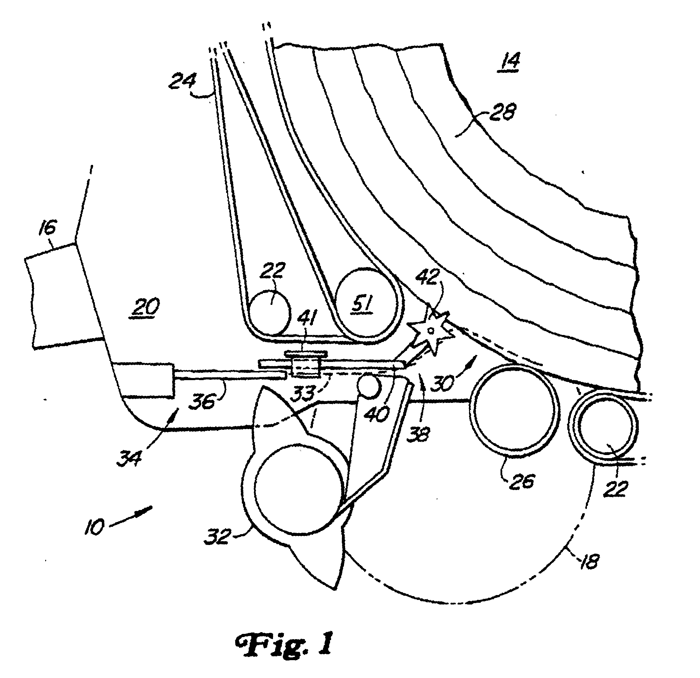

Fig. 1 zeigt einen Ausschnitt einer erfindungsgemäßen Rundballenpresse 10 mit einem Rahmen 12, der einen Preßraum 14 in sich birgt, über eine Deichsel 16 an ein nicht gezeigtes Zugfahrzeug, z. B. einen Ackerschlepper, angeschlossen ist und sich über Räder 18 auf dem Boden abstützt.

Der Rahmen 12 wird beiderseits von sich in der Fahrtrichtung erstreckenden, vertikalen Seitenwänden 20 begrenzt, zwischen denen die Deichsel 16 gehalten ist.

Zwischen den Seitenwänden 20 erstrecken sich in diesem Ausführungsbeispiel eine Vielzahl von Rollen 22, über die Preßelemente 24 in der Form von Riemen geführt sind, wie dies bekannt ist. In dem mit Blick auf die Zeichnung unten und an der Rundballenpresse 10 unten links gelegenen Bereich befindet sich ein Einlaß 30 zwischen den Preßelementen 24 und einer Walze 26, auf der sich ein in dem Preßraum 14 gebildeter Ballen 28 abstützen kann. Durch diesen Einlaß 30 wird mittels einer nicht gezeigten Pick-up und einem oberschlächtigen Förderer 32 vom Boden aufgenommenes Erntegut dem Preßraum 14 zugeführt, wo es zu dem zylindrischen Ballen 28 geformt wird.

Die Ausbildung einer Rundballenpresse 10 mit als Riemen ausgebildeten Preßelementen 24 ist nicht zwingend. Vielmehr kann der Preßraum 14 auch von drehbaren Rollen umfangsmäßig begrenzt werden, deren Drehachse im wesentlichen auf einer Kreislinie liegt. Außerdem können Stabkettenförderer als Preßelemente verwendet werden, die auf einer vorgegebenen starren oder veränderlichen Bahn bewegt werden. Schließlich können auch Mischformen von Riemen, Stabkettenförderern und Rollen verwendet werden.

Zwischen der Deichsel 16 und dem unter ihr befindlichen Förderer 32 ist eine Bindevorrichtung 34 vorgesehen, mit deren Hilfe nur andeutungsweise gezeigtes Garn 33 von einer Vorratsrolle entnommen und an den Umfang des Ballens 28 herangebracht wird, so daß dieser es während seiner Drehung mitnehmen kann. Die Bindevorrichtung 34 enthält in herkömmlicher Weise wenigstens eine Garnführung 36 in der Art eines Bindearms, der in einer im wesentlichen horizontalen Ebene verstellbar ist. Die Garnführung 36 kann aus einer dem Ballen 28 abgelegenen Stellung in eine diesem zugelegene Stellung gebracht werden und nimmt am Ende des Bindevorgangs vorteilhafterweise eine Stellung an der Ballenseite ein, wobei auch jede andere Stellung, z. B. in der Mitte, möglich ist. Die Bindevorrichtung 34 kann auch in einem anderen, z. B. oberen oder rückwärtigen Bereich der Rundballenpresse 10 vorgesehen werden.

Der Bindevorrichtung 34 ist ferner eine nicht dargestellte Schneidvorrichtung zugeordnet, die das Garn 33 zwischen der Vorratsrolle und dem Ballen 28 trennt, wenn genug Garn 33 aufgewickelt ist. Diese Schneidvorrichtung ist herkömmlich derart ausgebildet und angeordnet, daß der Garnstrang bzw. die Garnstränge am Ende des Bindevorgangs zwischen einen Anschlag und eine Schneidplatte eingeführt und zu einem bestimmbaren Zeitpunkt durchtrennt werden. Dieser Zeitpunkt kann bei der Verwendung der erfindungsgemäßen Rundballenpresse 10 so gesteuert werden, daß die Durchtrennung erst dann erfolgt, wenn genügend Garn 33 auf dem Ballen 28 gesichert ist.

Die Preßelemente 24 erstrecken sich nur über einen Teil des Abstandes zwischen den Seitenwänden 20, so daß auf einer einzigen Rolle 22 mehrere als Riemen ausgebildete Preßelemente 24 nebeneinander angeordnet werden, die einen geringen Spalt, z. B. 5 bis 10 mm, zwischen sich belassen.

Unterhalb der Deichsel 16 befindet sich in dem dargestellten Ausführungsbeispiel eine Eindrückvorrichtung 38, die einen Arm 40 und ein um eine horizontale Achse drehbar angebrachtes Eindrückmittel 42 aufweist. Der Arm 40 wird im Einsatz durch einen hülsenförmigen Halter 41 in einer festen Position in einem Seitenbereich der Rundballenpresse 10 gehalten.

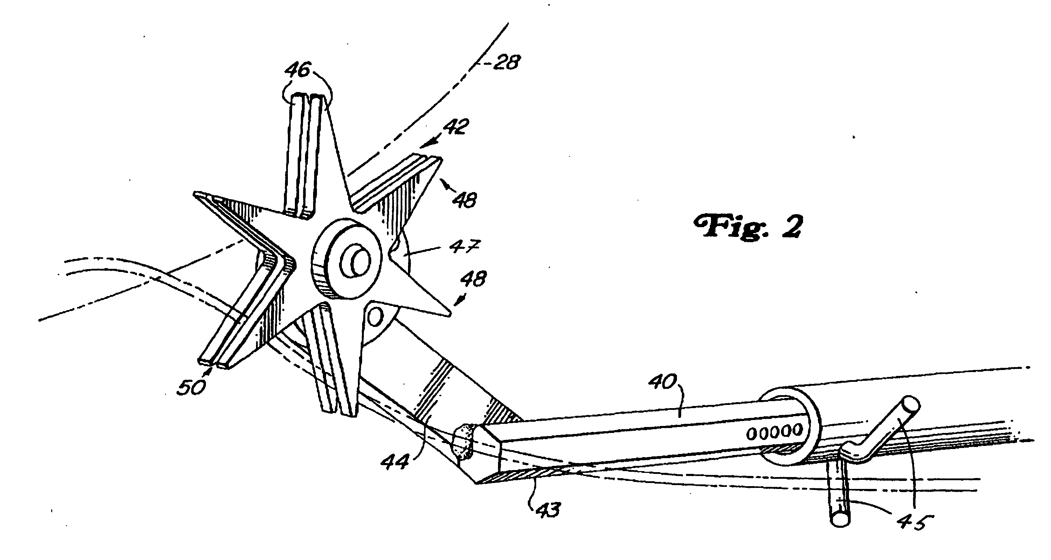

Das Eindrückmittel 42 ist, wie in Figur 2 dargestellt, in der Art eines mehrteiligen Sternrades ausgebildet und weist zwei Einzelsternräder 46 auf. Die Einzelsternräder 46 sind an einer fest mit dem Arm 40 verbundenen Lochscheibe 47 um eine im wesentlichen horizontale Achse drehbar angebracht. Die Position des Eindrückmittels 42 ist veränderbar, in dem die Einzelsternräder 46 in einem anderen Loch der Lochscheibe 47 drehbar gelagert werden.

Die Einzelsternräder 46 weisen fingerartige bzw. strahlenartige Vorsprünge 48 auf und sind voneinander beabstandet angebracht, so daß sie zwischen sich eine Vertiefung bzw. einen Spalt 50 zur Garnführung begrenzen. Der Arm 40, der geradlinig in den Preßraum 14 hineinragt, weist einen ersten Teil 43 und einen zweiten Tragteil 44 auf, der fest in einer abgewinkelten Position an dem ersten Teil 43 angebracht ist, so daß sich das Eindrückmittel 42 in einer Position befindet, die möglichst dicht an einer Starterwalze 51 der Rundballenpresse 10 angeordnet ist. Das Eindrückmittel 42 greift zumindest teilweise in die Umfangsfläche des Ballens 28 ein.

Der erste Teil 43 wird in dem Halter 41 aufgenommen, der so ausgebildet ist, daß der erste Teil 43 in Längsrichtung in ihm verschiebbar ist, sobald nicht gezeigte Sicherungsmittel, die beispielsweise als Stifte ausgeführt sein können, die in passende Aussparungen an dem ersten Teil 43 und dem Halter 41 passen, gelöst werden. Der erste Teil 43 ist im vorliegenden Ausführungsbeispiel als Sechskantprofil ausgeführt. Der Halter 41 weist ein entsprechendes Innensechskantprofil auf. Der erste Teil 43 kann in einer Vielzahl von Stellungen an den Halter 41 angebracht werden, so daß die Ausrichtung des Eindrückmittels 42 weiter variiert werden kann. Der Halter 41 weist als Stifte ausgeführte Mittel 45 auf, die zwischen sich einen Spalt einschließen, in dem das Garn 33 geführt wird.

In dem Fall, daß mehrere lose Garnenden an mehreren Stellen entlang des Ballenumfangs befestigt werden sollen, können auch mehrere mit einem Abstand nebeneinander angeordnete Eindrückvorrichtungen 38 verwendet werden.

Ausgehend von dem vorbeschriebenen Aufbau ergibt sich folgende Funktion der erfindungsgemäßen Rundballenpresse.

Sobald in dem Preßraum 14 ein Ballen 28 die gewünschte oder maximale Größe erreicht hat, wird die Bindevorrichtung 34 automatisch oder manuell in Betrieb gesetzt, und die Garnführung 36 führt das Garnende oder die Garnenden an den sich drehenden Ballen 28 heran, der diese(s) mitnimmt und somit den Bindevorgang einleitet. Während des Bindevorgangs bewegt sich die Garnführung 36 entlang der Längsachse des Ballens 28. Das Eindrückmittel 42 wird durch die Bewegung des Ballens 28 während der Ballenbildung und während des Bindevorgangs in Drehung versetzt und läuft auf der Ballenumfangsfläche mit und drückt dabei mittels seiner Vorsprünge 48 jeweils eine nicht gezeigte Rille in die Ballenumfangsfläche. Da das Eindrückmittel 42 in der Art eines mehrteiligen Sternrades ausgeführt ist, wird die Rille durch die Einzelsternräder 46 erzeugt, d. h., sie setzt sich aus mehreren, nebeneinander liegenden, durch die Einzelsternräder 46 erzeugten Einzelvertiefungen zusammen. Unter dem Begriff Rille ist daher eine nicht genau definierte Vertiefung in der Ballenoberfläche zu verstehen, die keine scharfen Kanten aufweist, und die durch einen Bereich von bezogen auf die übrige Ballenoberfläche eingdrücktem Material gebildet wird.

Nach Abschluß des eigentlichen Bindevorgangs bewegt sich die Garnführung 36 in Richtung einer Seitenwand 20 der Rundballenpresse 10 in einen Bereich in dem die Eindrückvorrichtung 38 angebracht ist, und verharrt dort.

Das Garn 33 wird durch die an dem Halter 41 angebrachten Mittel 45 in Richtung des Eindrückmittels 42 geführt, so daß das Garn 33 in die Vertiefung 50 an dem Eindrückmittel 42 gelangt. Dies wird dadurch erleichtert, daß das Garn 33 unter Spannung steht. Das Eindrückmittel 42 führt das Garn 33 in die Rille in der Umfangsfläche des Ballens 28. Das durch die Eindrückvorrichtung 42 bzw. durch die Einzelsternräder 46 eingedrückte Material hat die Tendenz, in seine ursprüngliche Lage zurückzukehren. Das Garn 33 wird durch die Reibung zwischen sich und dem den Ballen 28 bildenden Material sowie durch die in ihre Ausgangslage zurückdrängenden Halme des Materials in der Rille der Umfangsfläche gehalten.

Wenn Garn 33 in ausreichendem Maß in den Ballen 28 geführt wurde, wird die nicht gezeigte Schneidvorrichtung der Bindevorrichtung 34 betätigt und das Garn 33 durchtrennt. Anschließend wird der Ballen 28 aus dem Preßraum 14 ausgestoßen.

Um die Eindrückvorrichtung 38 an verschiedene Erntebedingungen bzw. an die Erfordernisse von unterschiedlichem Erntegut wie beispielsweise an Silage, Heu oder Stroh anzupassen, sind an der Eindrückvorrichtung 38 mehrere Verstellmöglichkeiten vorgesehen. Die Position des Eindrückmittels 42 kann über die verschiedenen Löcher der Lochscheibe 47 variiert werden. Darüber hinaus kann die Eindrückvorrichtung 38 durch ein Verschieben des Arms 40 in dem Halter 41 auf den Ballen 28 zu oder von diesem weg bewegt werden, wodurch der Eindrückdruck, den das Eindrückmittel 42 auf den Ballen 28 auswirkt, beeinflußt werden kann. Die Winkellage der Eindrückvorrichtung 38 bzw. des Eindrückmittels 42 kann dadurch verändert werden, daß der Arm 40 in unterschiedlichen Positionen in den Halter 41 gesteckt, d. h. um seine Längsachse geschwenkt wird.

## Patentansprüche

1. Rundballenpresse (10) mit einem Preßraum (14), der auf seinem Umfang im wesentlichen von Preßelementen (24) umgeben wird, und mit einer Bindevorrichtung (34), die Garn (33)auf die Umfangsfläche eines in dem Preßraum (14) gebildeten und sich drehenden Ballens (28) aufwickelt, **gekennzeichnet durch** wenigstens eine Eindrückvorrichtung (38) mit wenigstens einem rotierenden Eindrückmittel (42), die das Garn (33) in die Umfangsfläche des Ballens (28) einbringt.

2. Rundballenpresse nach Anspruch 1, **dadurch gekennzeichnet, daß** die Eindrückvorrichtung (38) wenigstens einen Arm (40) aufweist, auf dem das Eindrückmittel (42) vorzugsweise um eine wenigstens annähernd horizontale Achse drehbar gelagert ist.

3. Rundballenpresse nach Anspruch 1 oder 2, **dadurch gekennzeichnet, daß** das Eindrückmittel (42) Vertiefungen (50) aufweist, die sich in Umfangsrichtung des Eindrückmittels (42) erstrecken.

4. Rundballenpresse nach einem oder mehreren der vorherigen Ansprüche, **dadurch gekennzeichnet, daß** das Eindrückmittel (42) mindestens einen fingerartigen Vorsprung (48) aufweist und vorzugsweise als Sternrad ausgebildet ist.

5. Rundballenpresse nach einem oder mehreren der vorherigen Ansprüche, **dadurch gekennzeichnet, daß** das Eindrückmittel (42) mehrteilig ausgebildet ist und wenigstens zwei Einzelsternrädern (46) umfaßt.

6. Rundballenpresse nach Anspruch 5, **dadurch gekennzeichnet, daß** die Einzelsternräder (46) zwischen sich die Vertiefung (50) bestimmen.

7. Rundballenpresse nach einem oder mehreren der vorherigen Ansprüche, **dadurch gekennzeichnet, daß** die Bindevorrichtung (34) eine bewegliche Garnführung (36) enthält, die zur Beendigung des Bindevorgangs eine Stellung im Bereich der Eindrückvorrichtung (38) einnimmt.

8. Rundballenpresse nach einem oder mehreren der vorherigen Ansprüche, **dadurch gekennzeichnet, daß** die Eindrückvorrichtung (38) im Bereich des Arms (40) Mittel (45) zur Führung des Garns (33) aufweist.

9. Rundballenpresse nach einem oder mehreren der vorherigen Ansprüche, **dadurch gekennzeichnet, daß** die Bindevorrichtung (34) oder die Eindrückvorrichtung (38) eine Schneidvorrichtung zum Trennen des Garns (33) aufweist.

10. Rundballenpresse nach einem oder mehreren der vorherigen Ansprüche, **dadurch gekennzeichnet, daß** die Eindrückvorrichtung (38) und/oder das Eindrückmittel (42) in Bezug auf den Preßraum (14) verstellbar, insbesondere verschiebbar oder verschwenkbar ist.

11. Rundballenpresse nach einem oder mehreren der vorherigen Ansprüche, **dadurch gekennzeichnet, daß** die Spannung des Garns (33) während dessen Einführung in den Ballen (28) veränderbar ist.

## Claims

1. A round baler (10) with a pressing chamber (14) which is substantially surrounded over its periphery with pressing elements (24), and with a binding device (34) which wraps twine (33) round the peripheral surface of a bale (28) formed in the pressing chamber (14) and undergoing rotation, **characterized by** at least one rotating pressing-in device (38) with at least one rotating pressing-in means (42) which sets the twine (33) into the peripheral surface of the bale (28).

2. A round baler according to claim 1, **characterized in that** the pressing-in device (38) comprises at least one arm (40) on which the pressing-in means (42) is mounted rotatably, preferably about an at least approximately horizontal axis.

3. A round baler according to claim 1 or 2, **characterized in that** the pressing-in means (42) has depressions (50) which extend in the peripheral direction of the pressing-in means (42).

4. A round baler according to one or more of the preceding claims, **characterized in that** the pressing-in means (42) has at least one finger-like projection (48) and is preferably in the form of a star wheel.

5. Around baler according to one or more of the preceding claims, **characterized in that** the pressing-in means (42) is of multi-part form and comprises at least two individual star wheels (46).

6. A round baler according to claim 5, **characterized in that** the individual star wheels (46) define the depression (50) therebetween.

7. A round baler according to one or more of the preceding claims, **characterized in that** the binding device (34) includes a movable twine guide (36) which assumes a location in the region of the pressing-in device (38) for the end of the binding operation.

8. A round baler according to one or more of the preceding claims, **characterized in that** the pressing-in device (38) comprises means (45) in the region of the arm (40) for guiding the twine (33).

9. A round baler according to one or more of the preceding claims, **characterized in that** the binding device (34) or the pressing-in device (38) comprises a cutting device for severing the twine (33).

10. A round baler according to one or more of the preceding claims, **characterized in that** the pressing-in device (38) and/or the pressing-in means (42) is adjustable relative to the pressing chamber (14), in particular can be shifted or pivoted.

11. A round baler according to one or more of the preceding claims, **characterized in that** the tension of the twine (33) during its introduction to the bale (28) is adjustable.

## Revendications

1. Presse à balles rondes (10) comportant une chambre de pressage (14), qui est entourée sur sa périphérie essentiellement par des éléments de pressage (24), et comportant un dispositif de liage (34), qui enroule un fil (33) sur la surface circonférentielle d'une balle (28) qui est formée dans la chambre de pressage (14) et tourne, **caractérisée par** au moins un dispositif d'enfoncement (38) comportant au moins un moyen rotatif d'enfoncement (42), qui applique le fil (33) dans la surface circonférentielle de la balle (28).

2. Presse à balles rondes selon la revendication 1, **caractérisée en ce que** le dispositif d'enfoncement (38) comporte au moins un bras (40), sur lequel le moyen d'enfoncement (42) est monté de manière à pouvoir tourner de préférence autour d'un axe au moins approximativement horizontal.

3. Presse à balles rondes selon la revendication 1 ou 2, **caractérisée en ce que** le moyen d'enfoncement (42) comporte des renfoncements (50), qui s'étendent dans la direction circonférentielle du moyen d'enfoncement (42).

4. Presse à balles rondes selon une ou plusieurs des revendications précédentes, **caractérisée en ce que** le moyen d'enfoncement (42) comporte au moins une partie saillante en forme de doigt (48) et est agencé de préférence sous la forme d'une roue étoile.

5. Presse à balles rondes selon une ou plusieurs des revendications précédentes, **caractérisée en ce que** le moyen d'enfoncement (42) est agencé sous la forme de plusieurs éléments et comporte au moins deux roues étoiles individuelles (46).

6. Presse à balles rondes selon la revendication 5, **caractérisée en ce que** les roues étoiles individuelles (46) déterminent entre elles le renfoncement (50).

7. Presse à balles rondes selon une ou plusieurs des revendications précédentes, **caractérisée en ce que** le dispositif de liage (34) contient un guide-fil mobile (36), qui, à la fin du processus de liage, prend une position située dans la zone du dispositif d'enfoncement (38).

8. Presse à balles rondes selon une ou plusieurs des revendications précédentes, **caractérisée en ce que** le dispositif d'enfoncement (38) possède, dans la zone des bras (40), des moyens (45) pour guider le fil (33).

9. Presse à balles rondes selon une ou plusieurs des revendications précédentes, **caractérisée en ce que** le dispositif de liage (34) ou le dispositif d'enfoncement (38) possède un dispositif de coupe pour sectionner le fil (33).

10. Presse à balles rondes selon une ou plusieurs des revendications précédentes, **caractérisée en ce que** le dispositif d'enfoncement (38) et/ou le moyen d'enfoncement (42) peuvent être réglés, notamment par translation ou pivotement, par rapport à la chambre de pressage (14).

11. Presse à balles rondes selon une ou plusieurs des revendications précédentes, **caractérisée en ce que** la tension du fil (33) est modifiable pendant l'insertion de ce fil dans les balles (28).
